# EUROPÄISCHE PATENTSCHRIFT

(11) **EP 1 670 630 B1**
(45) Veröffentlichungstag und Bekanntmachung des Hinweises auf die Patenterteilung: **25.07.2007**
(21) Anmeldenummer: 04765492.6
(22) Anmeldetag: 22.09.2004
(51) Int. Cl.: B29C 47/00, B29C 53/10

(54) **SCHLUPFKUPPLUNG FÜR BREMSROLLENANTRIEB AN DER FLACHLEGUNG**
INDUCTION COUPLING FOR BRAKING ROLLER DRIVE ON THE FLAT-FOLDING DEVICE
ACCOUPLEMENT A GLISSEMENT CONÇU POUR UN ENTRAINEMENT DE GALET DE FREINAGE D'UN DISPOSITIF DE POSITIONNEMENT A PLAT

(30) Priorität: 27.09.2003 DE 10344984; 14.04.2004 DE 102004019314
(43) Veröffentlichungstag der Anmeldung: 21.06.2006
(73) Patentinhaber: Windmöller & Hölscher KG, 49525 Lengerich (DE)
(72) Erfinder: BOSSE, Frank, 49549 Tecklenburg (DE)
(86) Internationale Anmeldenummer: PCT/EP2004/010626
(87) Internationale Veröffentlichungsnummer: WO 2005/032798

(56) Entgegenhaltungen:
- FR-A- 2 027 853
- GB-A- 664 412
- US-A- 5 106 281
- PATENT ABSTRACTS OF JAPAN Bd. 015, Nr. 267 (M-1133), 8. Juli 1991 (1991-07-08) & JP 03 090332 A (SEKISUI CHEM CO LTD), 16. April 1991 (1991-04-16)

## Beschreibung

Die Erfindung betrifft eine Flachlegevorrichtung für Folien oder Folienschläuche nach dem Oberbegriff des Anspruchs 1. Flachlegevorrichtungen dieser Art sind bekannt. Sie kommen insbesondere bei Extrusionsvorrichtungen zum Einsatz, welche Folienschläuche mit Hilfe eines Blaskopfes extrudieren. Diese Folienschläuche werden entweder zur Gänze flachgelegt oder vorher bereits zu Folien oder Folienbahnen aufgetrennt und anschließend flachgelegt. Die Flachlegevorrichtung besteht in der Regel aus keilförmig gegeneinander gestellten Flachlegeplatten beziehungsweise Flachlegegerüsten, die mit Flächen beaufschlagt sind, an welchen die flachzulegende Folie beziehungsweise die Wandungen des Folienschlauches entlang gleiten. In neuerer Zeit wird vorgeschlagen, statt dieser Flächen Rollen zu verwenden. Dies wird beispielsweise in der DE 101 40 577 A1 und der EP 795 391 A2 gezeigt. Aufgabe des Einsatzes der Rollen ist die Verminderung von Beschädigungen der frisch extrudierten Folien durch die Flachlegevorrichtungen. Jedoch gehört die weitere Verringerung dieser Beschädigungen noch immer zu den Beschäftigungen der Fachleute.

Daher geht die vorliegende Erfindung von den genannten Vorrichtungen aus und hat die Aufgabe, die erwähnten Beschädigungen an der Folie weiter zu vermindern. Diese Aufgabe wird durch die Merkmale des kennzeichnenden Teils des Anspruchs 1 gelöst. In der Sprache der vorliegenden Anmeldung kann Drehmoment sowohl von einem Motor, also einer aktiv drehmomenterzeugenden Einheit, als auch von einer Bremsvorrichtung, bereitgestellt werden.

In diesem Denkmodell wird davon ausgegangen, dass eine Bremsvorrichtung "negatives Drehmoment" bereitstellt, während ein Motor "positives Drehmoment" bereitstellt. Positives Drehmoment unterstützt die Eigenbewegung der Folie, negatives wirkt ihr entgegen. Bei verschiedenen Folien können entweder Bremsen oder Motore von Vorteil sein. Bei beiden Arten von Drehmomentbereitstellungsmitteln im Sinne der vorliegenden Erfindung ist eine erfindungsgemäße Ausgestaltung der Drehmomentübertragungsmittel von großem Vorteil. Sowohl eine Bremse als auch ein Motor kann durch die rigide Art und Weise der ihm eigenen Drehmomentbereitstellung Schäden an der Folie hervorrufen. Daher lehrt die vorliegende Erfindung, Drehmomentübertragungsmittel vorzusehen, welche Schlupf zwischen der zumindest einer Rolle und den Mitteln zur Bereitstellung des Drehmomentes zulassen. Hierbei liegt Schlupf zumindest dann vor, wenn sich die Rolle mit einer anderen Umdrehungszahl pro Zeiteinheit dreht, als die Antriebszapfen der Mittel zur Bereitstellung des Drehmoments. Die Drehmomentübertragungsmittel werden oft vorteilhaft als Kupplung ausgeführt werden. Kraftschlüssig im Sinne gängiger Definitionen und der vorliegenden Erfindung sind Verbindungen, bei denen die zu verbindenden Teile durch eine Kraft, z. B. eine Reibungskraft, in ihrer gegenseitigen Lage gehalten werden. Bei einer Überschreitung einer gewissen Kraft beziehungsweise im vorliegenden Falle eines gewissen Drehmoments wird eine Bewegung der beiden verbundenen Teile gegeneinander möglich (oft gleiten die zu verbindenden Teile aneinander), ohne dass damit die Verbindung irreproduzierbar zerstört wird. Ein Beispiel einer kraftschlüssigen Leistungsübertragung sind Reibradgetriebe, aber auch Reibkupplungen. In der Regel spielt auch bei Hydraulikkupplungen die Reibung eine Rolle, so dass auch sie in der Regel unter den Begriff ,reibkraftschlüssige Verbindungen' fallen. Die Herbeiführung oder Unterstützung einer kraftschlüssigen Verbindung durch einen Magneten gehört zu den Maßnahmen, die zu einer vorteilhaften Ausführung der vorliegenden Erfindung herangezogen werden können. Hierbei ist es unerheblich, ob die gesamte Kraft der zur Realisierung der kraftschlüssigen Verbindung von dem Magneten bereitgestellt wird, oder ob der Magnet beispielsweise zwei Scheiben zusammenpresst, welche ihrerseits durch ihre Reibung die kraftschlüssige Verbindung herbeiführen. Bei allen Arten einer kraftschlüssigen Verbindung erscheint es vorteilhaft, wenn die einander zugewandten Kraftflussflächen, über die die kraftschlüssige Verbindung erfolgt und über die schließlich Drehmoment übertragen wird, reduzierbar oder steigerbar sind. Hierdurch lässt sich der Betrag der maximalen Drehmomentübertragung definieren beziehungsweise variieren. In der Regel werden Kraftflussflächen die einander zugewandten Flächen tellerartiger Kupplungsstücke sein, welche durch irgendeine Kraft zusammengepresst werden und auf diese Weise den Kraft- oder Reibungsschluss herstellen. Falls mehrere derartige Übertragungsmittel vorgesehen sind, erscheint es vorteilhaft, diese Mehrzahl an Kraftflussflächen miteinander zu verbinden, so dass eine Relativbewegung der Kraftflussflächen, welche dem Drehmomentbereitstellungsmittel zugeordnet sind, gegenüber den Kraftflussflächen, welche den Rollen zugeordnet sind, zu Variation des maximal übertragbaren Drehmomentes bei allen Übertragungsmitteln führt. Eine weitere Möglichkeit, das maximal übertragbare Drehmoment einer solchen kraftschlüssigen Verbindung zu variieren, liefert ein Drehmomentübertragungsmittel, welches die kraftschlüssige Verbindung mit Hilfe eines Elektromagneten realisiert. Bei einem solchen Elektromagneten kann die Feldstärke durch eine Variation der Stromstärke, mit der der Elektromagnet angesteuert wird, verändert werden. Dadurch ist natürlich auch die Stärke der kraftschlüssigen Verbindung veränderbar. Die Veränderbarkeit kann insbesondere bei Auftragswechseln oder bei der Feststellung von Schäden, beispielsweise durch die Folie beobachtende Sensoren, eine bedeutende Rolle für die Folienqualität spielen und ist damit bei der Ausführung der vorliegenden Erfindung ausgesprochen vorteilhaft.

Weitere Ausführungsbeispiele der vorliegenden Erfindung gehen aus der gegenständlichen Beschreibung und den Ansprüchen hervor.

Die einzelnen Figuren zeigen:
- Fig. 1: Eine Skizze einer Blasfolienextrusionsanlage.
- Fig. 2: Eine Skizze einer Flachlegeeinrichtung mit einer Bremseinrichtung pro Rolle.
- Fig. 3: Eine Skizze einer Flachlegeeinrichtung mit einer Bremseinrichtung für mehrere Rollen.
- Fig.4: Eine Skizze einer Rolle und einem Drehmomentbereitstellungsmittel, welche mit zwei radial zueinander angeordneten Antriebsscheiben beaufschlagt sind.
- Fig. 5: Eine weitere Skizze mit einem Drehmomentbereitstellungsmittel und einer Rolle, welche mit einer Kupplung ausgestattet ist.
- Fig. 6: Eine Skizze einer Rolle und eines Drehmomentbereitstellungsmittels, welche mit Kraftflussscheiben verbunden sind.
- Fig. 7: Die Anordnung aus Fig. 6, wobei die Kraftflussscheiben gegeneinander verschoben sind.
- Fig. 8: Die Anordnung aus Fig. 7, wobei mehrere Paare aus Motoren und Antriebsscheiben gezeigt sind.
- Fig. 9: Eine erfindungsgemäße Anordnung einer Rolle und eines Drehmomentbereitstellungsmittels mit einem Elektromagneten und einem Leistungssteller.
- Fig. 10: Zwei gegeneinander dargestellte Kraftflussschieber.
- Fig. 11: Zwei Kraftflussschieber mit Magneten.

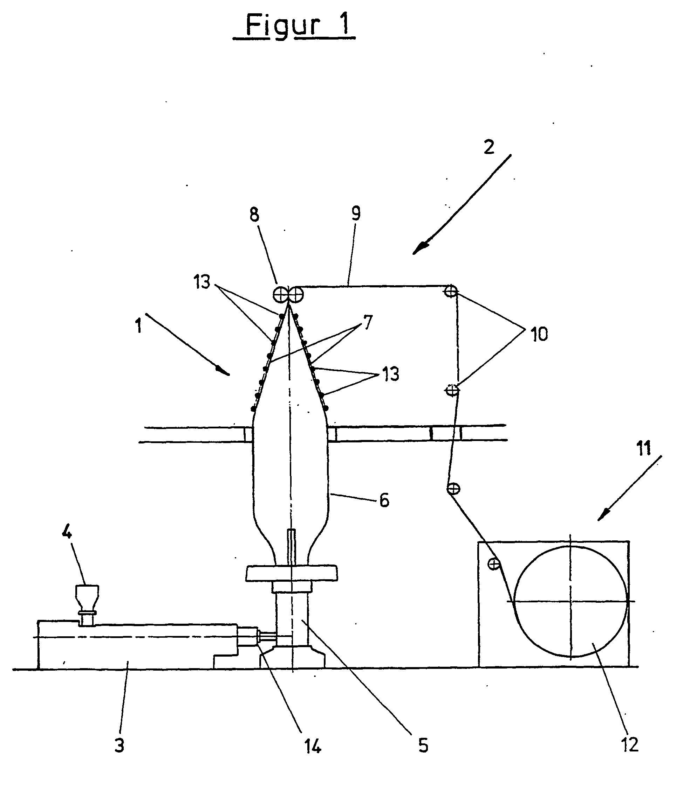

Figur 1 zeigt eine Flachlegevorrichtung 1, welche aus zwei keilförmig gegeneinander angestellten Flachlegeeinrichtungen 7 mit Rollen 13 besteht. Die Flachlegevorrichtung 1 ist ihrerseits Teil einer Blasfolienextrusionsanlage 2 zur Herstellung von Folienschläuchen 6.

Der Materialfluss in der Blasfolienextrusionsanlage beginnt am Versorgungstrichter 4 des Extruders 3 über den dem Extruder 3 Kunststoffrohmaterial - vorzugsweise in Granulatform - zugeführt wird. Bekanntlich überführt der Extruder 3 das nicht dargestellte Rohmaterial in eine zähflüssige Form, welche über den Anschlussstutzen 14 dem Blaskopf 5 zugeführt wird.

Der Blaskopf 5 extrudiert den Folienschlauch 6, der in der Flachlegevorrichtung 1, welche aus zwei keilförmig gegeneinander angestellten Flachlegeeinrichtungen 7 besteht, flachgelegt wird. Die Abquetschwalzen 8 quetschen die flachgelegte Folie 9 zusätzlich ab. Die flachgelegte Folie läuft über Rollen 10 zur Wickelvorrichtung 11 und wird dort auf die Rolle 12 aufgewickelt.

Blasfolienextrusionsanlagen dieser Art sind seit langem bekannt und daher in allen möglichen Ausführungsformen vorhanden. So ist es mittlerweile gebräuchlich, die flachgelegte Folie 9 nach dem Abquetschen zunächst einer sogenannten Reversiervorrichtung zuzuführen, um die Wickelqualität zu verbessern. Eine solche Vorrichtung ist in dem dargestellten Beispiel nicht gezeigt.

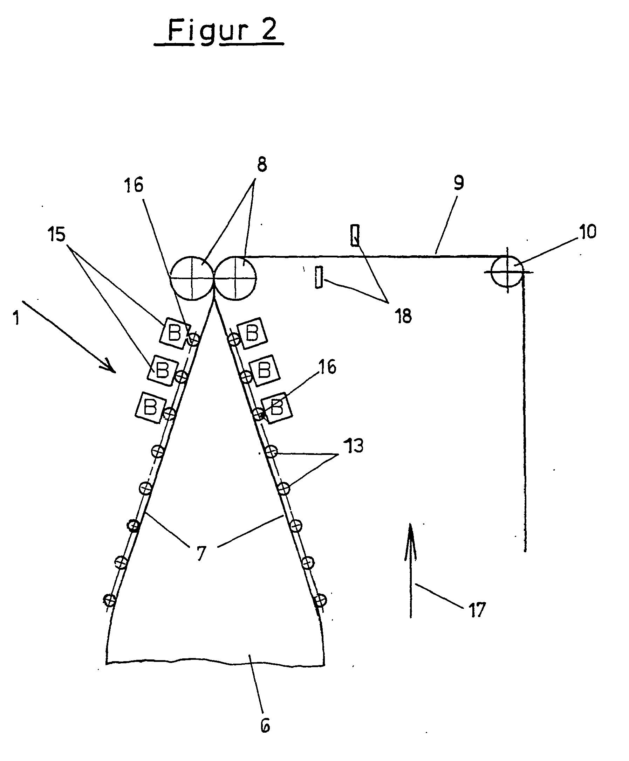

Figur 2 zeigt die Flachlegevorrichtung 1 mit zwei keilförmig zueinander angeordneten Flachlegeeinrichtungen 7, welche auch Flachlegeplatten 7 genannt werden. Der Folienschlauch 6 läuft in Vorschubrichtung der Folie, welche durch den Pfeil 17 dargestellt ist, durch die Flachlegevorrichtung 1 und gleitet dabei an den Rollen 13 entlang. Den gebremsten Rollen 16 ist jeweils eine Bremsvorrichtung 15 zugeordnet. In Figur 2 sind auch zwei Sensoren 18 gezeigt, welche ober- und unterhalb der flachgelegten Folie 9 gehaltert sind. Diese Sensoren untersuchen die Folie auf Beschädigungen und Falten. Es handelt sich vorzugsweise um optische Sensoren. Solche Sensoren können auch zwischen den Rollen 16 oder Rollengruppen angeordnet werden. Solche Anordnungen erleichtern die Zuordnung der Beschädigungen oder Falten zu den verursachenden Rollen.

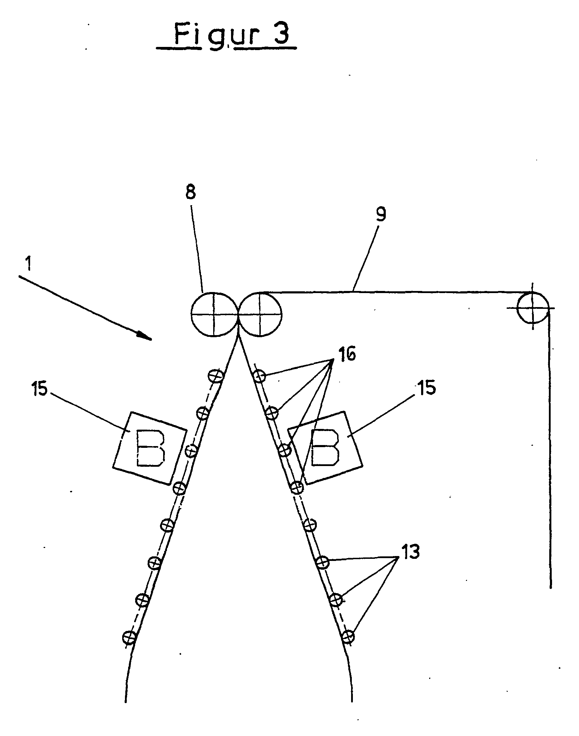

Figur 3 zeigt eine Flachlegevorrichtung 1 mit ungebremsten Rollen 13 und gebremsten Rollen 16. Wobei in diesem Ausführungsbeispiel die gebremsten Rollen einer Flachlegeeinrichtung von jeweils einer Bremsvorrichtung 15 gebremst werden. Die Bremskraft beziehungsweise das Drehmoment wird hier über nicht dargestellte Riemen übertragen. Die von einer Bremsvorrichtung gebremsten Rollen gehören einer Gruppe von Rollen an.

Bei allen drei Figuren wurde auf die Darstellung von Steuer- und

Regeleinrichtungen, Steuerleitungen, Stromkabeln und Ähnlichem verzichtet. Auch Vorrichtungen zur Überwachung der Drehung der Rollen wurden aus darstellerischen Gründen nicht gezeigt.

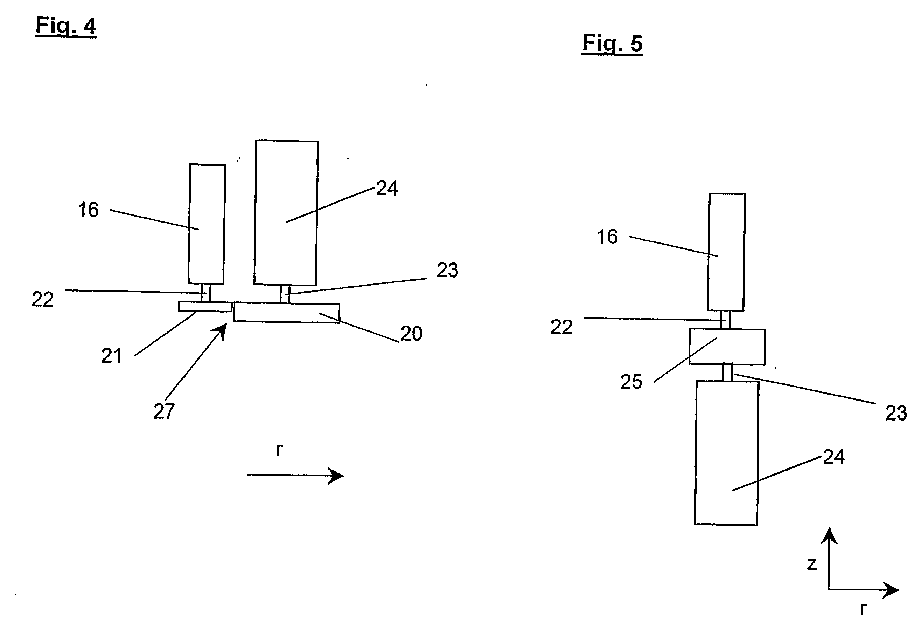

Fig. 4 zeigt eine Skizze einer erfindungsgemäßen Anordnung einer Rolle 16 und eines Drehmomentbereitstellungsmittels 24 einer Flachlegeeinheit 1. Die Rolle 16 ist mit einem Antriebszapfen 22 versehen, und die Drehmomentbereitstellungsmittel 24 sind mit einem Antriebszapfen 23 ausgestattet. An den Antriebszapfen 22 und 23 sind Antriebsscheiben 21 und 20 angebracht. Die Umfangsflächen dieser beiden Antriebsscheiben 21 und 20 berühren sich und definieren auf diese Weise eine kraftschlüssige Verbindung 27. Die Umfangsflächen der beiden Antriebsscheiben sind glatt und vorteilhafterweise aus einem elastischem Material wie Gummi gearbeitet. Diese Anordnung von Rolle und Drehmomentbereitstellungsmittel 24 eignet sich besonders zur Realisierung der Anordnungen von Rollen 16 und

Drehmomentbereitstellungsmitteln 24, wie sie in den Figuren 2 und 3 dargestellt sind. Auf eine Darstellung der weiteren Elemente der Flachlegevorrichtung, wie sie beispielsweise in den ersten drei Figuren dargestellt und wie sie beispielsweise nötig sind, um die Rollen 16 und die Drehmomentbereitstellungsmittel 24 zu halten beziehungsweise zu lagern, ist genauso verzichtet worden wie in den Figuren 5 bis 9.

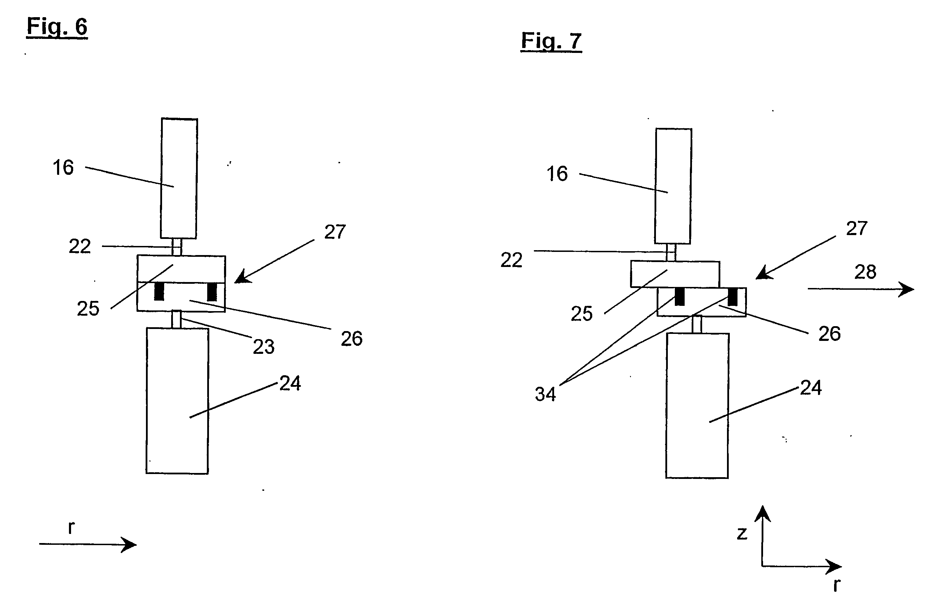

Fig. 5 zeigt eine Skizze eines anderen Funktionspaares aus einer Rolle 16 und einem Drehmomentbereitstellungsmittel 24. Auch hier sind wieder Antriebszapfen 21 und 22 zu sehen. Diese sind mit einer schlicht als Rechteck quasi in Form einer Blackbox dargestellten Kupplung 25 verbunden. Diese Kupplung kann eine handelsübliche Reibekupplung sein, sie kann eine Zahnradkupplung, jedoch auch eine hydraulische Kupplung darstellen. Wie in den Ansprüchen ausgeführt, ist das Charakteristikum der Kupplung 25 oder einer Kupplung allgemein im Sinne der vorliegenden Anmeldung die Trennbarkeit der Drehmomentbereitstellungsmittel 24 und der Rolle 16. Aus dieser Beschreibung folgt, dass auch eine Vorrichtung nach der Figur 4 oder nach den noch folgenden Figuren als Kupplung realisierbar ist, wenn die entsprechenden Antriebsscheiben 21 und 20 oder Kraftflussscheiben 25 und 26 in den folgenden Figuren getrennt werden können. Bei einem Vergleich der Figuren 4 und 5 fällt natürlich auf, dass bei Figur 4 die Rolle 16 und die Drehmomentbereitstellungsmittel 24 in der radialen Richtung r der Rolle 16 aufeinander folgen. In der Figur 5 sind diese beiden Elemente 16 und 24 so angeordnet, dass sie in der axialen Richtung der Rolle 16 aufeinander folgen. Zu den Nachteilen dieser Anordnung gehört natürlich die höhere Baulänge in der vorgenannten axialen Richtung z der Rolle 16. Zu den Vorteilen gehört, wie die Figuren 6 bis 9 noch ausweisen, dass es in der Regel einfacher ist,

Antriebsscheiben oder Kraftflussscheiben bereitzustellen, welche eine große Kraftflussfläche mit einer großen gegenseitigen Überdeckungsfläche aufweisen.

Bei Figur 4 ist die Berührungsfläche zwischen den beiden Antriebsscheiben 21 und 20 eher klein.

Wie erwähnt zeigt auch die Figur 6 eine Anordnung von einer Rolle 16 und einem Drehmomentbereitstellungsmittel 24. Die Antriebszapfen 22 und 23 dieser beiden Elemente folgen, wie bei Figur 5, in der axialen Richtung z der Rolle 16 aufeinander ab. Sie sind durch die beiden Kraftflussscheiben 25 und 26 miteinander verbunden, welche Kraftflussflächen aufweisen, die einander zugewandt sind und einander berühren und auf diese Weise die kraftschlüssige Verbindung 27 definieren. Die zwischen diesen beiden Kraftflussscheiben herrschende Kraft kann dadurch aufgebracht werden, dass die beiden Scheiben von einer äußeren Kraft aufeinander gedrückt werden und auf diese Weise Reibung entsteht, die ein Verrutschen der Scheiben gegeneinander bei der Kreisbewegung verhindert, bis ein maximaler Drehmomentübertrag überschritten wird. Es ist jedoch auch möglich, die Kräfte durch geeignete Maßnahmen innerhalb der beiden Kraftflussscheiben 26 und 25 bereitzustellen. So ist es möglich, eine oder die beiden Scheiben 25 und 26 mit Magneten auszustatten, so dass eine magnetische Anziehungskraft zwischen entgegengesetzten Magnetpolen oder zwischen Magnet und Ferromagnetika oder in einer anderen Weise zustande kommt. In jedem der genannten Fälle und in jedem der Fälle, in denen eine kraftschlüssige Verbindung zwischen Kraftflussflächen der Kraftflussscheiben 25 und 26 zustande kommt, ist es möglich, dem Betrag der maximalen Drehmomentübertragung zwischen den beiden Scheiben 25 und 26 zu variieren, indem eine Verschiebung der beiden Kraftflussscheiben 25 und 26 in der radialen Richtung der Rolle 16 beziehungsweise der Scheiben 25 und 26 vorgenommen wird, so dass, wie in Figur 7 dargestellt, die Kontaktfläche beziehungsweise die Fläche der gegenseitigen Überdeckung der beiden Kraftflussscheiben 25 und 26 verändert beziehungsweise, wie gezeigt gesenkt wird. In diesem Zusammenhang ist noch darauf hinzuweisen, dass es nicht unbedingt nötig ist, dass die beiden Kraftflussscheiben in direktem Kontakt stehen. So kann insbesondere bei der Verwendung von Magneten sogar eine weitere Scheibe zwischen den beiden Kraftflussscheiben angebracht sein oder sogar ein Spalt bestehen. Die magnetischen Anziehungskräfte werden trotzdem einen gewissen Drehmomentübertrag zwischen den beiden Scheiben sicherstellen. Ähnliche Möglichkeiten bestehen bei der Verwendung von Hydraulikkupplungen beziehungsweise kraftschlüssigen Verbindungen, welche mit Hilfe von

Flüssigkeiten oder ähnlichen Medien zwischen zwei Scheiben hergestellt werden. Auch solche Maßnahmen sind vor dem Hintergrund der vorliegenden Beschreibung für den Fachmann reproduzierbar.

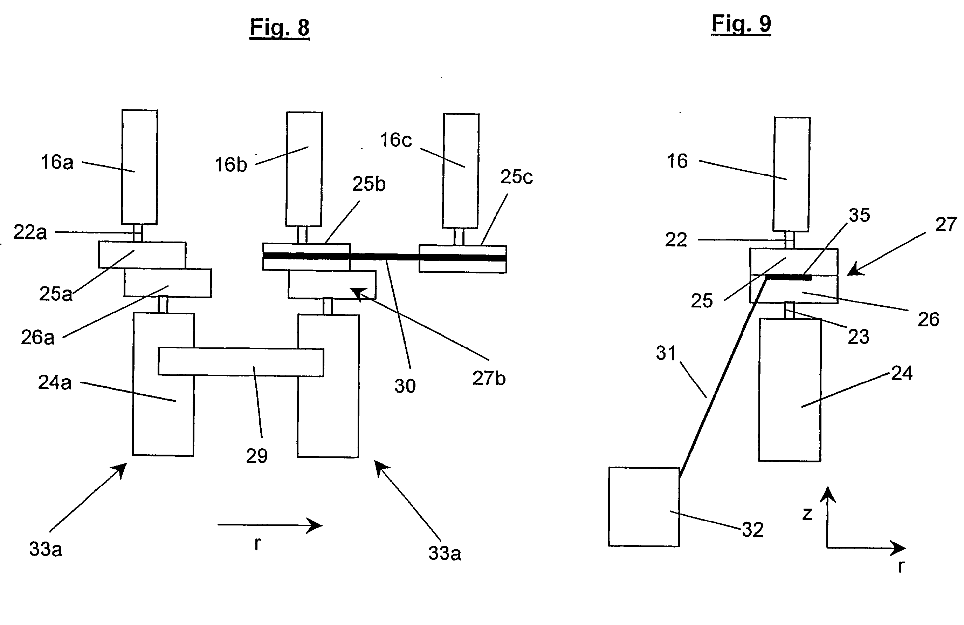

Eine ähnliche Maßnahme zur Variation des übertragenen Drehmomentes, wie in Figur 7, ist bei Figur 8 ergriffen worden. Figur 8 zeigt jedoch mehrere Funktionspaare aus Rolle 16 und Drehmomentbereitstellungsmittel 33a und 33b. Durch die Verbindungsstange 29 ist dargestellt, dass die beiden Drehmomentbereitstellungsmittel 24a und 24b miteinander verbunden sind, so dass sie gemeinsam in der radialen Richtung der Rollen 16 a, b und c verschoben werden können. Bei dieser gemeinsamen Verschiebung werden beide Kontaktflächen verringert. Ein weiterer Unterschied zur Figur 7 besteht darin, dass die Kraftflussscheibe 25 b des Funktionspaares 33b auch Drehmoment für den Betrieb der Rolle 16c übertragen bekommt. Dieses Drehmoment gibt sie über die Kette 30 an die Antriebsscheibe 21 c der Rolle 16c weiter. Mit den Maßnahmen, wie sie in Figur 7 und 8 dargestellt sind, ist es auch möglich, durch eine geeignete geometrische Ausgestaltung der Verhältnisse der verschiedenen Antriebsscheiben 25 und 26 zueinander, durch eine geeignete Anordnung derselben in einer Flachlegeeinrichtung, und durch eine Festlegung einer geeigneten Bewegungsachse für die gemeinsame Bewegung, bei einer gemeinsamen Bewegung von ersten Antriebsscheiben zu zweiten Antriebsscheiben die Kontaktflächen verschiedener Antriebsscheibenpaare 25a, 26a, 25b, 26b um verschiedene Beträge oder gar in verschiedenem Verhältnis zu reduzieren beziehungsweise zu variieren. Auf diese Weise kann eine unterschiedliche Variation des für den Beginn einer Schlupfbewegung entscheidenden maximal zu übertragenen Drehmomentes vorgenommen werden. Eine solche Maßnahme besitzt ähnliche Vorteile wie die Bereitstellung unterschiedlichen Drehmomentes für unterschiedliche Rollen.

Figur 9 zeigt erneut eine Anordnung, die der in Figur 6 gezeigten sehr ähnlich ist. Jedoch ist in Figur 9 der Leistungssteller 32, welche über das Verbindungskabel 31 mit der Kraftflussscheibe 26 verbunden ist, mit dargestellt. Auch bei der Darstellung des Leistungsstellers 32 und des Stromkabels 31 handelt es sich natürlich um eine skizzierte. Darstellung. Normalerweise müsste das Stromkabel durch den Antriebszapfen 23 zu der Kraftflussscheibe 26 geführt werden, um betriebsfähig zu bleiben. Durch die beiden zusätzlich gezeigten Merkmale 32 und 31 soll jedoch angedeutet werden, dass auch ein Elektromagnet 35 sich hervorragend eignet, um das über die kraftschlüssige Verbindung 27 maximal übertragbare Drehmoment zu variieren. Wie bereits erwähnt erfolgt diese Variation in erster Linie über eine verändernde Stromstärke, mit der die Windungen des Elektromagneten 35 beaufschlagt werden. Diese Veränderung zieht eine Veränderung des Magnetfeldes nach sich. Eine Ausführungsform der vorliegenden Erfindung mit einem Elektromagneten 35 lässt sich jedoch beliebig mit anderen Ausführungsformen der Erfindung kombinieren.

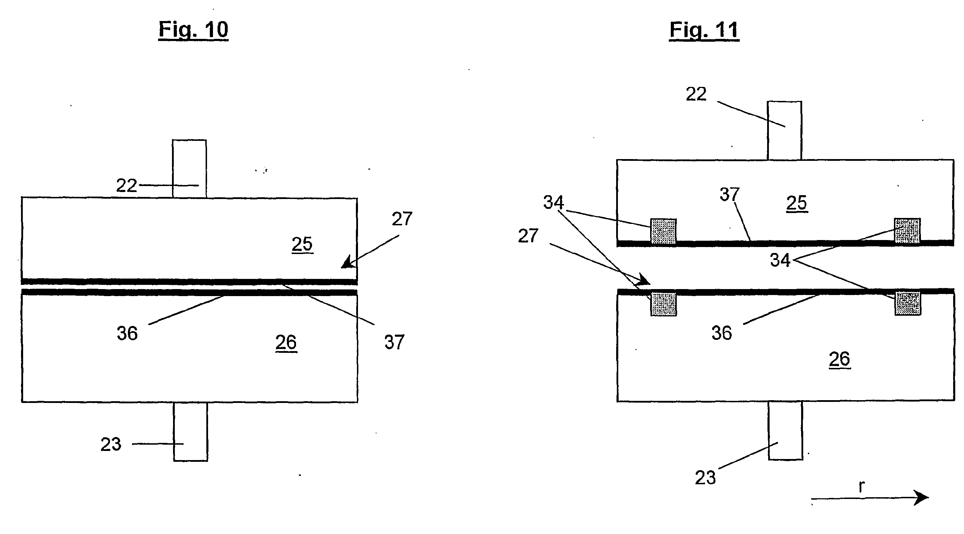

Die Figuren 10 und 11 zeigen noch einmal größere Bildausschnitte mit den Kraftflussscheiben 25 und 26 und verdeutlichen die Lage der Flussflächen 36 und 37 zueinander.

Figur 10 zeigt eine Anordnung ohne Magnete 34. In Figur 10 ist der Zwischenraum zwischen den Kraftflussflächen 36 und 37 übertrieben dargestellt. In Wirklichkeit ist eine solche Anordnung in der Regel darauf angewiesen, dass die Kraftflussflächen 36 und 37 aufeinander liegen und auf diese Weise Reibung erzeugen. Die dazu notwendige Kraft kann beispielsweise über die beiden Antriebszapfen 22 und 23 auf die Scheiben 25 und 26 übertragen werden. Die Drehmomentübertragung erfolgt dann durch die Reibung zwischen den beiden Scheiben. Wie bereits erwähnt, ist es jedoch auch prinzipiell möglich, einen Spalt zwischen den Kraftflussflächen 36 und 37 zu lassen und in diesem Spalt beispielsweise eine hydraulische Flüssigkeit anzuordnen, die den Kraftflussflächen Reibungskraft vermittelt.

Eine andere Möglichkeit, Kraft über eine längere Distanz zu übertragen, wird in Figur 11 dargestellt. Hier sind Magnete 34 in beiden Kraftflussscheiben 25 und 26 angeordnet. Diese Magnete bilden Funktionspaare, die jeweils aus Magneten zweier Scheiben bestehen, die in Opposition zueinander in diesen beiden Scheiben angeordnet sind und in einer Weise gegenpolig zueinander angeordnet sind, die zu einer Anziehung führen. Auf diese Weise ist es möglich, Kraft auch über einen magnetischen Spalt zu übertragen. Jedoch wird in der Regel bei Verwendung solcher Magnetkupplungen auch die Reibung eine Rolle spielen, das heißt, dass die Magnete die Kraft bereitstellen, die die beiden Kraftflussscheiben 25 und 26 zusammenpresst und auf diese Weise zur notwendigen Reibung zwischen den Kraftflussflächen 36 und 37 führt. Auch anhand von Figur 11 ist leicht einzusehen, dass eine Verschiebung einer der beiden Kraftflussscheiben 25 und 26 schon um geringe Beträge in der radialen Richtung der Rolle r zu einer erheblichen Absenkung der zwischen den Magneten 34 der beiden Scheiben 25,26 aufgebauten Kraft führt. Damit wird auch das maximal von der Kraftflussscheibe 26 auf die Kraftflussscheibe 25 übertragbare Drehmoment verringert und damit dafür gesorgt, dass schon bei einem geringeren Drehmoment Schlupf eintritt.

| Bezugszeichenliste | |
|---|---|
| 1 | Flachlegevorrichtung |
| 2 | Blasfolienextrusionsanlage |
| 3 | Extruder |
| 4 | Versorgungstrichter |
| 5 | Blaskopf |
| 6 | Folienschlauch |
| 7 | Flachlegeeinrichtung/Flachlegeplatter |
| 8 | Abquetschwalzen |
| 9 | flachgelegte Folie bzw. flachgelegter Folienschlauch |
| 10 | Transportrollen |
| 11 | Wickelvorrichtung |
| 12 | Folienrolle |
| 13 | Rollen |
| 14 | Anschlussstutzen |
| 15 | Bremsvorrichtung |
| 16 | Rollen |
| 17 | Pfeil in Förderrichtung der Folie |
| 18 | Sensoren |
| 20 | Antriebsscheibe von 24 |
| 21 | Antriebsscheibe der Rolle 16 |
| 21c | Antriebsscheibe der Rolle 16c |
| 22 | Antriebszapfen |
| 23 | Antriebszapfen von 24 |
| 24 | Motor oder Bremse, Mittel zur Bereitstellung eines Drehmoments |
| 25 | Kraftflussscheibe der Rolle 16 |
| 26 | Kraftflussscheibe der Rolle 24 |
| 27 | Kraftschlüssige Verbindung |
| 28 | Pfeil in y-Richtung |
| 29 | Verbindungsstangen |
| 30 | Antriebskette |
| 31 | Stromkabel |
| 32 | Leistungssteller |
| 33 a, b | Funktionspaar aus 16 + 24 |
| 34 | Magnet |
| 35 | Elektromagnet |
| 36 | Kraftflussfläche zu 26 |
| 37 | Kraftflussfläche zu 25 |
| 38 | |
| 39 | |
| 40 | |
| 41 | |
| 42 | |
| 43 | |
| 44 | |
| 45 | |
| 46 | |
| 47 | |
| 48 | |
| 49 | |
| 50 | |
| 51 | |
| 52 | |
| 53 | |
| 54 | |

## Patentansprüche

1. Flachlegevorrichtung (1) für von Blasfolienextrusionsanlagen (1) extrudierte Folie oder Folienschläuche (6),
■ welche (1) zumindest eine Rolle (16) enthält,
■ welche (16) die Wandungen der Folie oder des Folienschlauches (16) führt,
■ wobei die Flachlegeeinrichtung (1) zumindest eine Vorrichtung (B, 24,22,23,21,20,25,26) zur Beeinflussung der Drehgeschwindigkeit der zumindest einen Rolle (16) umfasst,
■ welche (B,24,22,23,21,20,25,26) Mittel zur Bereitstellung eines Drehmoments (B,24) enthält,
■ welches mit Übertragungsmitteln (22,23,21,20) auf die zumindest eine Rolle (16) übertragbar ist,
**gekennzeichnet durch**
Übertragungsmittel (22,23,21,20), welche Schlupf zwischen der zumindest einen Rolle (16) und den Mitteln (24) zur Bereitstellung eines Drehmoments zulassen.

2. Flachlegevorrichtung (1) nach Anspruch 1
**dadurch gekennzeichnet, dass**
die Übertragungsmittel (22,23,21,20) eine Kupplung (25) umfassen, mit welcher sich die zumindest eine Rolle (16) und die Mittel (24) zur Bereitstellung eines Drehmoments trennen lassen.

3. Flachlegevorrichtung (1) nach einem der vorstehenden Ansprüche
**dadurch gekennzeichnet, dass**
die Übertragungsmittel (20-23) eine Stelle (21) umfassen, bei der Drehmoment über eine kraftschlüssige Verbindung übertragen wird.

4. Flachlegevorrichtung (1) nach dem vorstehenden Anspruch,
**dadurch gekennzeichnet, dass**
die kraftschlüssige Verbindung zumindest eine der folgenden Merkmale umfasst:
■ eine Hydraulikkupplung
■ eine Reibekupplung.

5. Flachlegevorrichtung (1) nach einem der Ansprüche 2 bis 4
**dadurch gekennzeichnet, dass**
die kraftschlüssige Verbindung zumindest einen Magneten (34,35) enthält.

6. Flachlegevorrichtung (1) nach einem der Ansprüche 2 bis 5
**dadurch gekennzeichnet, dass**
■ der zumindest einen Rolle (16) erste Kraftflussflächen (37) und den Mitteln zur Bereitstellung eines Drehmoments (B,24) zweite Kraftflussflächen (36) zugeordnet sind,
■ welche (36,37) einander zugewandt sind und
■ welche (36,37) die kraftschlüssige Verbindung (27) definieren,
■ wobei die Fläche der gegenseitigen Überdeckung der ersten und zweiten Kraftflussflächen (36,37) den Betrag der maximalen Drehmomentübertragung definiert und
■ wobei die Fläche der gegenseitigen Überdeckung der ersten und zweiten Kraftflussflächen (36,37) durch eine Relativbewegung der ersten und zweiten Kraftflussflächen (36,37) variierbar ist.

7. Flachlegevorrichtung (1) nach einem der vorstehenden Ansprüche
**dadurch gekennzeichnet, dass**
mehrere Übertragungsmittel (20-23) vorgesehen sind.

8. Flachlegevorrichtung (1) nach Anspruch 7, rückbezogen auf Anspruch 6
**dadurch gekennzeichnet, dass**
die Fläche der gegenseitigen Überdeckung der ersten und zweiten Kraftflussflächen (36,37) der Übertragungsmittel mehrerer Rollen (16) durch eine gemeinsame Relativbewegung der ersten und zweiten Kraftflussflächen (36,37) dieser Rollen (16) variierbar ist.

9. Flachlegevorrichtung (1) nach einem der vorstehenden Ansprüche
**dadurch gekennzeichnet, dass**
ein Übertragungsmittel (20-23) mehreren Rollen (16) Drehmoment überträgt.

10. Flachlegevorrichtung (1) nach einem der Ansprüche 5 bis 9
**gekennzeichnet durch**
■ eine kraftschlüssige Verbindung (27), welche zumindest einen Elektromagneten (35) enthält,
■ der (35) an einen Leistungssteller (32) angeschlossen ist, mit die Stromstärke in den Spulen des Elektromagneten (35) und so die von diesem (35) erzeugte magnetische Feldstärke variierbar ist.

## Claims

1. Lay-flat equipment (1) for films or tubular films (6) extruded by blown film extrusion installations (1),
□ said installation (1) comprising at least one roller (16),
□ which (16) guides the walls of the film or of the tubular film (16) [sic: 6]
□ wherein the lay-flat equipment (1) comprises at least one device (B, 24, 22, 23, 21, 20, 25, 26) for influencing the rotational speed of the roller (16),
□ said device (B, 24, 22, 23, 21, 20, 25, 26) comprising means (9) for providing a torque (B, 24).
□ which (B, 24) can be transferred onto the roller (16) by means of transfer devices (22, 23, 21, 20),
**characterized in**
transfer devices (22, 23, 21, 20), which allow a slip between the roller (16) and the devices (24) for providing a torque.

2. Lay-flat equipment (1) according to claim 1
**characterized in that**
the transfer devices (22, 23, 21, 20) comprise a coupling (25), using which the roller (16) and the means (24) for providing a torque can be separated.

3. Lay-flat equipment (1) according to any of the preceding claims
**characterized in that**
the transfer devices (20-23) comprise a location (21), at which the torque is transferred using a force-fit connection.

4. Lay-flat equipment (1) according to the preceding claim
**characterized in that**
the force-fit connection comprises at least one of the following characteristics:
□ a hydraulic coupling
□ a friction coupling.

5. Lay-flat equipment (1) according to any of the claims 2 to 4
**characterized in that**
the force-fit connection contains at least one magnet (34, 35).

6. Lay-flat equipment (1) according to any of the claims 2 to 5
**characterized in that**
□ first force flow surfaces (37) are assigned to the roller (16) and second force flow surfaces (36) are assigned to the means for providing a torque (B, 24),
□ said force flow surfaces (36, 37) being turned towards one another and
□ which (36, 37) define the force-fit connection (27),
□ wherein the surface of the opposite overlap of the first and second force flow surfaces (36, 37) defines the amount of the maximum torque transmission and
□ wherein the surface of the opposite overlap of the first and second force flow surfaces (36, 37) can be changed by a relative movement of the first and second force flow surfaces (36, 37).

7. Lay-flat equipment (1) according to any of the preceding claims
**characterized in that**
several transfer devices (20-23) are provided.

8. Lay-flat equipment (1) according to claim 7, referred back to claim 6
**characterized in that**
the surface of the opposite overlap of the first and the second force flow surfaces (36, 37) of the transfer devices of several rollers (16) can be changed by a common relative movement of the first and second force flow surfaces (36, 37) of these rollers (16).

9. Lay-flat equipment (1) according to any of the preceding claims
**characterized in that** a transfer device (20-23) transfers torque to several rollers (16).

10. Lay-flat equipment (1) according to any of the claims 5 to 9
**characterized in**
□ a force-fit connection (27), which contains at least one electromagnet (35),
□ which (35) is connected to a power controller (32) using which the current intensity in the coils of the electromagnet (35) and thus the field intensity generated by the electromagnet (35) can be changed.

## Revendications

1. Dispositif de positionnement à plat (1) pour des feuilles ou gaines en feuille (6) extrudées par des installation d'extrusion de feuilles de soufflage (1)
• qui (1) comprend au moins un galet (16),
• qui (16) guide les parois de la feuille ou de la gaine en feuille (16),
• où le dispositif de positionnement à plat (1) comporte au moins un dispositif (B,24,22,23,21,20,25,26) pour agir sur la vitesse de rotation d'au moins un galet (16),
• qui (B,24,22,23,21,20,25,26) contient des moyens pour la mise à disposition d'un couple de rotation (B, 24)
• qui peut être transféré par des moyens de transfert (22,23,21,20) à au moins un galet (16),
**caractérisé par**
des moyens de transfert (22,23,21,20) qui permettent un glissement entre au moins un galet (16) et les moyens (24) pour la mise à disposition d'un couple de rotation.

2. Dispositif de positionnement à plat (1) selon la revendication (1),
**caractérisé en ce que**
les moyens de transfert (22,23,21,20) comprennent un couplage (25) au moyen duquel au moins un galet (16) et les moyens (24 pour la mise à disposition d'un couple de rotation peuvent être séparés.

3. Dispositif de positionnement à plat (1) selon l'une des revendications précédentes, **caractérisé en ce que** les moyens de transfert (20-23) comprennent un emplacement (21) où le couple de rotation est transféré par une liaison par force.

4. Dispositif de positionnement à plat (1) selon la revendication précédente,
**caractérisé en ce que** la liaison par force comprend au moins l'une des caractéristiques suivantes:
• un embrayage hydraulique
• un embrayage à friction.

5. Dispositif de positionnement à plat (1) selon l'une des revendications 2 à 4,
**caractérisé en ce que** la liaison par force comprend au moins un aimant (34,35).

6. Dispositif de positionnement à plat (1) selon l'une des revendications 2 à 5,
**caractérisé en ce que**
• sont associées à au moins un galet (16) des premières faces de flux de forces (37) et aux moyens pour la mise à disposition d'un couple de rotation (B,24) des deuxièmes faces de flux de forces (36),
• qui (36,37) sont orientées les unes vers les autres et
• qui (36,37) définissent la liaison par force (27),
• où la face du recouvrement mutuel des premières et deuxièmes faces de flux de forces (36,37) définit la somme du transfert maximal du couple de rotation et
• où la face du recouvrement mutuel des premières et deuxièmes faces de flux de forces (36,37) peut être amenée à varier par un mouvement relatif des premières et deuxièmes faces de flux de forces (36,37).

7. Dispositif de positionnement à plat (1) selon l'une des revendications précédentes,
**caractérisé en ce que** plusieurs moyens de transfert (20,23) sont prévus.

8. Dispositif de positionnement à plat (1) selon la revendication 7, se référant à la revendication 6,
**caractérisé en ce que** la face du recouvrement mutuel des premières et deuxièmes faces de flux de forces (36,37) des moyens de transfert de plusieurs galets (16) peut être amenée à varier par un mouvement relatif commun des premières et deuxièmes faces de flux de forces (36,37) de ces galets (16).

9. Dispositif de positionnement à plat (1) selon l'une des revendications précédentes,
**caractérisé en ce qu'**un moyen de transfert (20-23) transfère un couple de rotation à plusieurs galets (16).

10. Dispositif de positionnement à plat (1) selon l'une des revendications 5 à 9,
**caractérisé par**
• une liaison par force (27) qui contient au moins un électroaimant (35),
• qui (35) est connecté à un organe de réglage de puissance (32) au moyen duquel la force du courant dans les bobines de l'électroaimant (35) et ainsi la force de champ magnétique produite par celui-ci (35) peut être modifiée.
